# EUROPEAN PATENT SPECIFICATION

(11) **EP 4 371 089 B1**
(45) Date of publication and mention of the grant of the patent: **02.09.2026**
(21) Application number: 22760854.4
(22) Date of filing: 12.07.2022
(51) Int. Cl.: G06V 20/52, G06V 20/60, G08B 17/00, G08B 17/12

(54) **SYSTEMS AND METHODS FOR PARSING SENSOR DATA TO PROVIDE CONTEXTUAL DATA FOR A SECURITY EVENT**
SYSTEME UND VERFAHREN ZUM PARSEN VON SENSORDATEN ZUR BEREITSTELLUNG VON KONTEXTUELLEN DATEN FÜR EIN SICHERHEITSEREIGNIS
SYSTÈMES ET PROCÉDÉS D'ANALYSE DE DONNÉES DE CAPTEUR POUR FOURNIR DES DONNÉES CONTEXTUELLES POUR UN ÉVÉNEMENT DE SÉCURITÉ

(30) Priority: 14.07.2021 US 202163221775 P
(43) Date of publication of application: 22.05.2024
(73) Proprietor: Sensormatic Electronics LLC, Boca Raton, FL 33487 (US)
(72) Inventor: SUBRAMANIAN, Gopi, Boca Raton, Florida 33487 (US); CELI, Joseph, Boca Raton, Florida 33487 (US)
(74) Representative: Meissner Bolte Nürnberg
(86) International application number: PCT/US2022/073625
(87) International publication number: WO 2023/288209

(56) References cited:
- US-A1- 2004 175 040
- US-A1- 2016 379 456
- US-A1- 2018 308 326

## Description

### CROSS-REFERENCE TO RELATED APPLICATIONS

This application claims the benefit of United States Provisional Application No. 63/221,775, filed July 14, 2021.

### TECHNICAL FIELD

The described aspects relate to security systems.

### BACKGROUND

Aspects of the present disclosure relate generally to security systems, and more particularly, to providing contextual data for a security event in an environment.

Time sensitive security events such as fires, theft, and intrusions require immediate attention in order to reach a resolution. Time spent analyzing an event (e.g., who, what, where, how, etc.) needs to be minimized and the quality of the analysis needs to be optimized. Conventional security systems typically detect basic triggers such as a fire alarm activation or a forced door opening, and rely on the security forensics team to manually perform the analysis. This takes a considerable amount of time and is an ineffective approach to resolving a crisis.

For example, US 2018/0308326 Al discloses a digital safety system monitoring facilities for fire or suspicious persons. It utilizes sensors to determine smoke flow and locate humans.

Accordingly, there exists a need for improvements in such security systems.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. The scope of the invention is set up in the appended claims.

An example implementation includes a method for providing contextual data for a security event in an environment, comprising receiving sensor data from a plurality of sensors located in the environment, wherein the plurality of sensors comprises at least one camera and the sensor data includes at least a plurality of images captured by the at least one camera. The method further includes parsing the sensor data, wherein the parsing comprises identifying a plurality of objects in each image of the plurality of images, and determining attributes of each object of the plurality of objects. The method further includes storing, in a database, the parsed sensor data comprising identifiers of the plurality of objects and the attributes, wherein the database is structured such that object information is organized by timestamps and associated location in the environment. The method further includes detecting the security event at the environment. The method further includes determining a type, a time window, and a location of the security event. The method further includes retrieving, from the database, a set of object identifiers with timestamps within the time window and a matching location of the security event. The method further includes filtering, from the set of object identifiers, at least one object identifier that matches the type of the security event, and outputting, at a computing device, the at least one object identifier and attributes of the at least one object identifier in response to detecting the security event.

Another example implementation includes an apparatus for providing contextual data for a security event in an environment, comprising a memory and a processor in communication with the memory. The processor is configured to receive sensor data from a plurality of sensors located in the environment, wherein the plurality of sensors comprises at least one camera and the sensor data includes at least a plurality of images captured by the at least one camera. The processor is configured to parse the sensor data, wherein the parsing comprises identifying a plurality of objects in each image of the plurality of images, and determining attributes of each object of the plurality of objects. The processor is configured to store, in a database, the parsed sensor data comprising identifiers of the plurality of objects and the attributes, wherein the database is structured such that object information is organized by timestamps and associated location in the environment. The processor is configured to detect the security event at the environment and determine a type, a time window, and a location of the security event. The processor is configured to retrieve, from the database, a set of object identifiers with timestamps within the time window and a matching location of the security event. The processor is configured to filter, from the set of object identifiers, at least one object identifier that matches the type of the security event. The processor is configured to output, at a computing device, the at least one object identifier and attributes of the at least one object identifier in response to detecting the security event.

Another example implementation includes an apparatus for providing contextual data for a security event in an environment, comprising means for receiving sensor data from a plurality of sensors located in the environment, wherein the plurality of sensors comprises at least one camera and the sensor data includes at least a plurality of images captured by the at least one camera. The apparatus further includes means for parsing the sensor data, wherein the parsing comprises identifying a plurality of objects in each image of the plurality of images, and determining attributes of each object of the plurality of objects. The apparatus further includes means for storing, in a database, the parsed sensor data comprising identifiers of the plurality of objects and the attributes, wherein the database is structured such that object information is organized by timestamps and associated location in the environment. The apparatus further includes means for detecting the security event at the environment, and determining a type, a time window, and a location of the security event. The apparatus further includes means for retrieving, from the database, a set of object identifiers with timestamps within the time window and a matching location of the security event. The apparatus further includes means for filtering, from the set of object identifiers, at least one object identifier that matches the type of the security event. The apparatus further includes means for outputting, at a computing device, the at least one object identifier and attributes of the at least one object identifier in response to detecting the security event.

Another example implementation includes a computer-readable medium having stored instructions for providing contextual data for a security event in an environment, wherein the instructions are executable by a processor to receive sensor data from a plurality of sensors located in the environment, wherein the plurality of sensors comprises at least one camera and the sensor data includes at least a plurality of images captured by the at least one camera. The instructions are further executable to parse the sensor data, wherein the parsing comprises identifying a plurality of objects in each image of the plurality of images, and determining attributes of each object of the plurality of objects. The instructions are further executable to store, in a database, the parsed sensor data comprising identifiers of the plurality of objects and the attributes, wherein the database is structured such that object information is organized by timestamps and associated location in the environment. The instructions are further executable to detect the security event at the environment. The instructions are further executable to determine a type, a time window, and a location of the security event. The instructions are further executable to retrieve, from the database, a set of object identifiers with timestamps within the time window and a matching location of the security event. The instructions are further executable to filter, from the set of object identifiers, at least one object identifier that matches the type of the security event, and output, at a computing device, the at least one object identifier and attributes of the at least one object identifier in response to detecting the security event.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
Fig. 1 is a diagram of image frames captured by a camera in an environment, in accordance with exemplary aspects of the present disclosure.
Fig. 2 is a block diagram of a system that collects and parses sensor data to generate contextual information about a security event, in accordance with exemplary aspects of the present disclosure.
Fig. 3 is a block diagram of a computing device executing a sensor analytics services component, in accordance with exemplary aspects of the present disclosure.
Fig. 4 is a flowchart illustrating a method of providing contextual data for a security event in an environment, in accordance with exemplary aspects of the present disclosure.
Fig. 5 is a flowchart illustrating a method of detecting a security event, in accordance with exemplary aspects of the present disclosure.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The present disclosure describes a contextualizing component of a security system that receives and parses sensor data for storage in a data structure. When a security event is detected, parsed sensor data potentially relevant to the security event is automatically presented to security personnel. This takes away the need for the security personnel to manually sift through raw sensor data to understand why the security event occurred and enables them to focus on immediately resolving the security event.

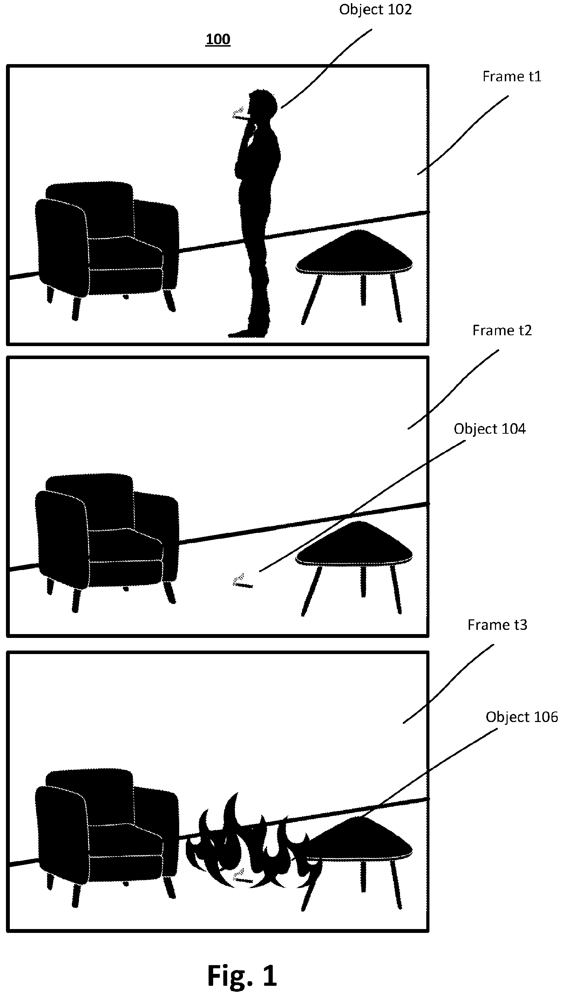

Fig. 1 is diagram 100 of image frames t1, t2, and t3 captured by a camera in an environment, in accordance with exemplary aspects of the present disclosure. Suppose that the environment has multiple rooms. In one room, a person is smoking a cigarette. The person disposes of the cigarette on the carpet floor and goes to different room. Moments later, the cigarette ignites a fire. The smoke caused by the fire may trigger a smoke detector in the room, which alarms a security guard to investigate the scene. In a typical situation, the security guard may view, using security cameras, whether an actual fire caused the smoke detector alarm to go off. In some cases, the security guard may also try to determine how the fire was ignited by rewinding the security footage in the room. In a time sensitive situation such as this, however, the manual searching and reviewing can cause serious delays in resolving the security event (e.g., extinguishing the fire and identifying who/what is responsible).

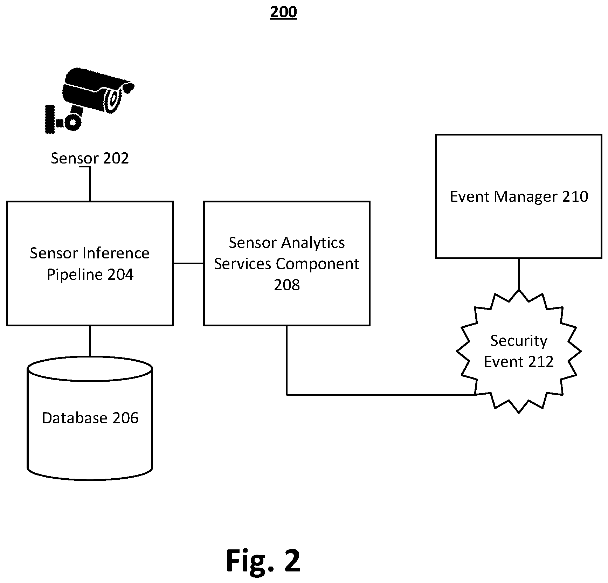

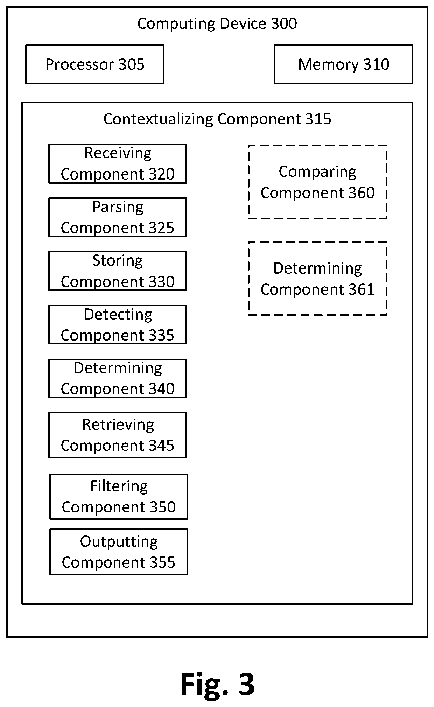

Accordingly, the present disclosure includes apparatuses and methods that provide contextual information for a security event in an environment. Fig. 2 is a block diagram of system 200 that collects and parses sensor data to generate the contextual information, in accordance with exemplary aspects of the present disclosure. System 200 includes sensor 202, which may include any device that collects data about a physical environment and is capable of communicating the data to a computing device 300 (described in Fig. 3). Examples of sensors include cameras, IR sensors, depth sensors, temperature sensors, microphones, motion sensors, smoke detectors, smart locks, etc.

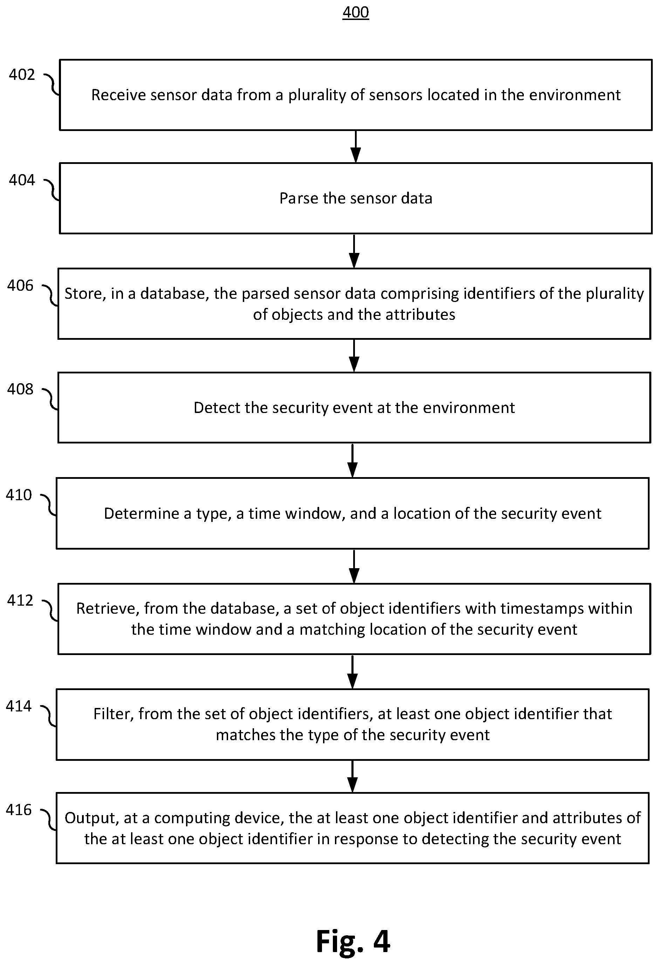

Sensor data from sensor 202 is sent to sensor inference pipeline 204. As discussed before, time sensitive security events require immediate attention and contextual information. Rather than parsing sensor data after a security event is detected, inference pipeline 204 parses sensor data in response to receiving it from sensor 202. The parsed data may comprise identification of objects in an image frame. For example, inference pipeline 204 may receive frames t1, t2, and t3. Using machine learning (e.g., object classification) and computer vision techniques (e.g., key point detection, segmentation, edge detection, etc.), pipeline 204 may identify objects 102 (the person), 104 (the cigarette), and 106 (the fire) in each frame, respectively. The identifiers and attributes of the objects are stored in database 206 (described in Fig. 4).

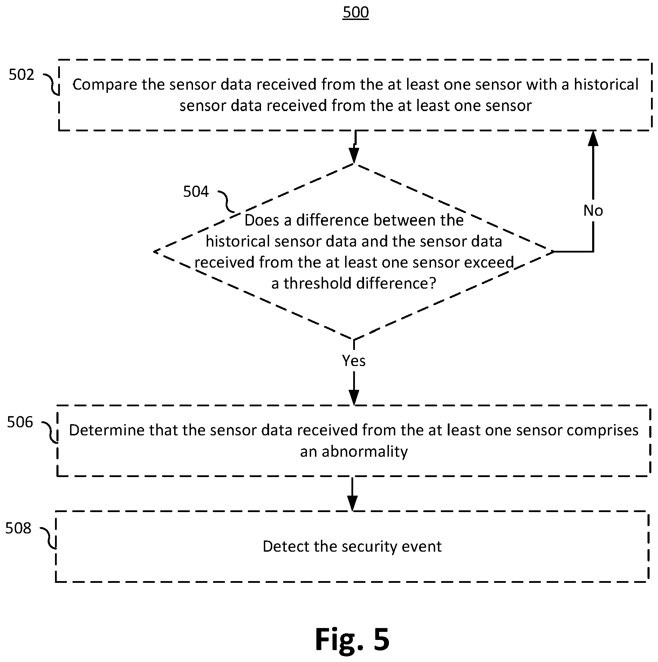

In some aspects, event manager 210 may be configured to detect security event 212 by analyzing the sensor data and searching for abnormalities (described in Fig. 5). In other aspects, event manager 210 may receive triggers from sensors that indicate security events. For example, a trigger may be a fire alarm or a smoke detector alarm being activated.

In response to security event 212 being detected, sensor analytics services component 208 retrieves parsed data from database 206 that is relevant to security event 212. For example, sensor analytics services component 208 may retrieve object information about objects 102, 104, and 106 because the objects were present at the location of the smoke detector alarm within a time window during which the alarm was activated. Furthermore, objects 102, 104, and 106 may particularly be presented as contextualized information due to a predetermined association between people and objects that can cause fires (e.g., cigarettes). Sensor analytics services component 208 is configured to map time, location, and type of security event to the parsed data in databased 206. In some aspects, the contextualized information may be accompanied with options for the user. For example, one option may be to track the person who started the fire as they navigate inside the environment (e.g., determine trajectory and see whether the person is exiting the environment to intercept him/her). Another option may be to call emergency services (e.g., 911) and provide the summary.

Because the sensor data has already been parsed and organized, as soon as the security event is detected, relevant information can be presented to a security guard (e.g., confirming an active fire caused by a cigarette left by a person). In some aspects, this contextualized information may be transmitted to a device of the security guard. In some aspects, the contextualized information may include a summary of what happened, wherein the summary is generated using natural language processing. For example, the summary may state "there is a fire in room 1 that was caused by a cigarette dropped by a person."

Fig. 3 is a block diagram of computing device 300 executing contextualizing component 315, in accordance with exemplary aspects of the present disclosure. Contextualizing component 315 may be comprised of sensor inference pipeline 204, database 206, sensor analytics services component 208, and/or event manager 210. Fig. 4 is a flowchart illustrating method 400 of providing contextual data for a security event in an environment, in accordance with exemplary aspects of the present disclosure. Referring to Fig. 3 and Fig. 4, in operation, computing device 300 may perform method 400 of providing contextual data for a security event in an environment via execution of contextualizing component 315 by processor 305 and/or memory 310.

At block 402, the method 400 includes receiving sensor data from a plurality of sensors located in the environment, wherein the plurality of sensors comprises at least one camera and the sensor data includes at least a plurality of images captured by the at least one camera. For example, in an aspect, computer device 300, processor 305, memory 310, contextualizing component 315, and/or receiving component 320 may be configured to or may comprise means for receiving a plurality of images (e.g., frame t1, t2, t3) captured by the at least one camera (e.g., sensor 202).

At block 404, the method 400 includes parsing the sensor data. For example, in an aspect, computer device 300, processor 305, memory 310, contextualizing component 315, and/or parsing component 325 may be configured to or may comprise means for identifying a plurality of objects (e.g., objects 102, 104, and 106) in each image of the plurality of images and determining attributes of each object of the plurality of objects. For example, the object may be a person and the attributes may include, but are not limited to a gender, an estimated age, biometrics, clothing information, and movement history. For other objects, parsing component 325 may identify a name, an object type or category, a color, a time spent in a series of image frames, etc.

At block 406, the method 400 includes storing, in a database, the parsed sensor data comprising identifiers of the plurality of objects and the attributes, wherein the database is structured such that object information is organized by timestamps and associated location in the environment. For example, in an aspect, computer device 300, processor 305, memory 310, contextualizing component 315, and/or storing component 330 may be configured to or may comprise means for storing, in database 206, the parsed sensor data comprising identifiers of the plurality of objects and the attributes. Referring to Fig. 1, the parsed sensor data stored in database 206 may look like the following Table 1 of parsed sensor data:

**Table 1: Example of Parsed Sensor Data**

| **Object** | **Time** | **Type** | **Gender** | **Age** | **Biometrics** | **Visuals** | **Location** |
|---|---|---|---|---|---|---|---|
| 102 | 10:10-10: 12am | Person | Male | 32 years | Asian | Red shirt, jeans | Room 1, Room 2 |
| 104 | 10:10-10: 16am | Cigarette | | | | Brown, white | Room 1 |
| 106 | 10:15-present | Flames | | | | Red | Room 1 |

The information in Table 1 indicates that a person (object 102) was detected between 10:10 am and 10:12 am. According to a machine learning algorithm that classifies objects, attributes for the person were listed as: male, 32 years old, Asian, wearing a red shirt and jeans. The person was seen in room 1 and room 2 of the environment. The person was smoking a cigarette, which was also detected between 10:10 am and 10:16 am in room 1. At 10:15 am and onward, flames were detected in room 1.

At block 408, the method 400 includes detecting a security event at the environment. For example, in an aspect, computer device 300, processor 305, memory 310, contextualizing component 315, and/or detecting component 335 may be configured to or may comprise means for detecting security event 212 at the environment. This is further described in Fig. 5. In some aspects, detecting the security event comprises receiving an indication of the security event from a user. In other aspects, as described in Fig. 5, an event manager 210 detects the security event by analyzing sensor data. For example, the security event may be that a fire alarm has been manually activated near room 1. The security event may also be that a smoke detector alarm has been activated in room 1.

At block 410, the method 400 includes determining a type, a time window, and a location of the security event. For example, in an aspect, computer device 300, processor 305, memory 310, contextualizing component 315, and/or determining component 340 may be configured to or may comprise means for determining a type, a time window, and a location of the security event. Following the previous example, the location of the security event may be associated with the location of the fire alarm or the smoke detector. The time window associated with the security event may depend on when the security event was initiated. Suppose that the smoke detector alarm was activated at 10:16 am. In some aspects, the time window may be set time period (e.g., 10 minutes) right before the security event was detected. In this case, the time window may be 10:06 am to 10:16 am. In other aspects, the time window may be a variable time period that increases until the security event is resolved. For example, the time window may start 10 minutes before the security event detection time and may continuously expand to the current time until the security event is marked as resolved.

In terms of type of security event, there may be a plurality of security event types that are predetermined. When detecting component 335 detects the security event, determining component 340 may classify the type based on a combination of sensors providing sensor data associated with the security event. For example, if a smoke alarm has been activated, the type of security event may be "fire hazard." If the security event is the detection of an unauthorized person in the environment, the type of security event may be "suspicious entity." Other examples of types may include "environmental hazard," "theft," "armed entity," "health emergency," etc.

At block 412, the method 400 includes retrieving, from the database, a set of object identifiers with timestamps within the time window and a matching location of the security event. For example, in an aspect, computer device 300, processor 305, memory 310, contextualizing component 315, and/or retrieving component 345 may be configured to or may comprise means for retrieving, from database 206, a set of object identifiers (e.g., person, cigarette, fire) with timestamps within the time window and a matching location of the security event. For example, retrieving component 345 may search for objects in database 206 that are identified in room 1 (or neighboring rooms) of the environment between 10:06 am and 10:16 am. This may retrieve several objects and attributes. However, not all objects may be relevant to the security event.

Thus, at block 414, the method 400 includes filtering, from the set of object identifiers, at least one object identifier that matches the type of the security event. For example, in an aspect, computer device 300, processor 305, memory 310, contextualizing component 315, and/or filtering component 350 may be configured to or may comprise means for filtering, from the set of object identifiers, at least one object identifier (e.g., person, cigarette, fire) that matches the type of the security event. In some aspects, each type of security event is mapped to a set of attributes of objects in the database. This mapping may be done manually by a person or using a machine learning algorithm configured to cluster relevant objects from past security events. For example, a "fire hazard" security event may be associated with objects such as persons, cigarettes, extinguisher, stove, electrical outlets, matches, wires, etc. Thus, if these objects are found in the location and time window, they are relevant to the security event and need to be displayed.

At block 416, the method 400 includes outputting, at a computing device, the at least one object identifier and attributes of the at least one object identifier in response to detecting the security event. For example, in an aspect, computer device 300, processor 305, memory 310, contextualizing component 315, and/or outputting component 355 may be configured to or may comprise means for outputting, at a computing device (e.g., of a security guard), the at least one object identifier (e.g., person, cigarette, fire) and attributes of the at least one object identifier (e.g., a description of the person) in response to detecting the security event. In the case of Fig. 1, a security guard is immediately provided with contextualized information about the smoke detector/fire alarm to help determine when, where, and why it was activated. Conventional security systems are typically configured to determine additional information about a security event after it has been detected or rely on a user to manually review the sensor data. Depending on the severity of the security event, any delays will put the resolution of the security event in jeopardy.

Fig. 5 is a flowchart illustrating method 500 of detecting security event 212, in accordance with exemplary aspects of the present disclosure. In some aspects, method 500 is executed by event manager 210.

At block 502, the method 500 includes comparing the sensor data received from the at least one sensor with a historical sensor data received from the at least one sensor. For example, in an aspect, computer device 300, processor 305, memory 310, contextualizing component 315, and/or comparing component 360 may be configured to or may comprise means for comparing the sensor data received from the at least one sensor with a historical sensor data received from the at least one sensor.

At block 504, the method 500 includes determining whether a difference between the historical sensor data and the sensor data received from the at least one sensor exceeds a threshold difference. For example, in an aspect, computer device 300, processor 305, memory 310, contextualizing component 315, and/or comparing component 360 may be configured to or may comprise means for determining whether a difference between the historical sensor data and the sensor data received from the at least one sensor exceeds a threshold difference. If the difference does not exceed the threshold difference (i.e., all things are normal), method 500 returns to 502. If the difference does exceed the threshold difference, method 500 advances to 506.

At block 506, the method 500 includes determining that the sensor data received from the at least one sensor comprises an abnormality. For example, in an aspect, computer device 300, processor 305, memory 310, contextualizing component 315, and/or determining component 361 may be configured to or may comprise means for determining that the sensor data received from the at least one sensor comprises an abnormality. In some aspects, the at least one sensor comprises a temperature sensor and the abnormality is a temperature difference from an average temperature that exceeds the threshold difference. In some aspects, the at least one sensor comprises a microphone and the abnormality is a sound level difference from an average sound level that exceeds the threshold difference.

At block 508, the method 500 includes detecting the security event. For example, in an aspect, computer device 300, processor 305, memory 310, contextualizing component 315, and/or detecting component 335 may be configured to or may comprise means for detecting the security event (as performed in block 408) due to the identified abnormality.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A computer implemented method for providing contextual data for a security event in an environment, comprising:
- receiving sensor data from a plurality of sensors located in the environment, wherein the plurality of sensors comprises at least one camera and the sensor data includes at least a plurality of images captured by the at least one camera;
- parsing the sensor data, wherein the parsing comprises:
- identifying a plurality of objects in each image of the plurality of images; and
- determining attributes of each object of the plurality of objects;
- storing, in a database, the parsed sensor data comprising identifiers of the plurality of objects and the attributes, wherein the database is structured such that object information is organized by timestamps and associated location in the environment;
- detecting the security event at the environment;
- determining a time window, and a location of the security event;
- determining, from a plurality of security event types, a type of the security event, wherein each type of security event from the plurality of security event types is mapped to a different set of attributes of objects in the database;
- retrieving, from the database, a set of object identifiers with timestamps within the time window and a matching location of the security event;
- filtering, from the set of object identifiers, at least one object identifier associated with the type of the security event, based on mappings in the database; and
- outputting, at a computing device, the at least one object identifier and attributes of the at least one object identifier in response to detecting the security event.

2. The method of claim 1,
wherein an object is a person and attributes of the person include a gender, an estimated age, biometrics, clothing information, and movement history,
wherein optionally a second object is a cigarette and wherein optionally another object is flames
and wherein optionally the security event is a fire alarm sensor trigger or a smoke detector alarm.

3. The method of claim 1,
wherein detecting the security event further comprises determining that sensor data received from at least one sensor of the plurality of sensors comprises an abnormality ,
wherein determining that the sensor data received from the at least one sensor comprises the abnormality further comprises:
- comparing the sensor data received from the at least one sensor with a historical sensor data received from the at least one sensor; and
- determining, based on the comparison, that a difference between the historical sensor data and the sensor data received from the at least one sensor exceeds a threshold difference.

4. The method of claim 3,
wherein the at least one sensor comprises a temperature sensor and the abnormality is a temperature difference from an average temperature that exceeds the threshold difference
or
wherein the at least one sensor comprises a microphone and the abnormality is a sound level difference from an average sound level that exceeds the threshold difference.

5. The method of claim 1,
wherein detecting the security event comprises receiving an indication of the security event from a user.

6. An apparatus for providing contextual data for a security event in an environment, comprising:
- a plurality of sensors;
- a memory; and
- a processor communicatively coupled with the memory and configured to:
- receive sensor data from the plurality of sensors located in the environment, wherein the plurality of sensors comprises at least one camera and the sensor data includes at least a plurality of images captured by the at least one camera;
- parse the sensor data, wherein the parsing comprises:
- identifying a plurality of objects in each image of the plurality of images; and
- determining attributes of each object of the plurality of objects;
- store, in a database, the parsed sensor data comprising identifiers of the plurality of objects and the attributes, wherein the database is structured such that object information is organized by timestamps and associated location in the environment;
- detect the security event at the environment;
- determine a time window, and a location of the security event;
- determine, from a plurality of security event types, a type of the security event, wherein each type of security event from the plurality of security event types is mapped to a different set of attributes of objects in the database;
- retrieve, from the database, a set of object identifiers with timestamps within the time window and a matching location of the security event;
- filter, from the set of object identifiers, at least one object identifier associated with the type of the security event based on mappings in the database; and
- output, at a computing device, the at least one object identifier and attributes of the at least one object identifier in response to detecting the security event,

7. The apparatus of claim 6,
wherein an object is a person and attributes of the person include a gender, an estimated age, biometrics, clothing information, and movement history.
wherein optionally a second object (104) is a cigarette and
wherein optionally a third object (106) is flames
and wherein optionally the security event is a fire alarm sensor trigger or a smoke detector alarm..

8. The apparatus of claim 6,
wherein detecting the security event further comprises determining that sensor data received from at least one sensor of the plurality of sensors comprises an abnormality,
wherein determining that the sensor data received from the at least one sensor comprises the abnormality further comprises:
- comparing the sensor data received from the at least one sensor with a historical sensor data received from the at least one sensor; and
- determining, based on the comparison, that a difference between the historical sensor data and the sensor data received from the at least one sensor exceeds a threshold difference.

9. The apparatus of claim 8,
wherein the at least one sensor comprises a temperature sensor and the abnormality is a temperature difference from an average temperature that exceeds the threshold difference or
wherein the at least one sensor comprises a microphone and the abnormality is a sound level difference from an average sound level that exceeds the threshold difference.

10. The apparatus of claim 6,
wherein detecting the security event comprises receiving an indication of the security event from a user.

11. A computer-readable medium having stored instructions for providing contextual data for a security event in an environment, wherein the instructions are executable by a processor to perform the method of any of claims 1 to 5.

## Patentansprüche

1. Computerimplementiertes Verfahren zur Bereitstellung von Kontextdaten für ein Sicherheitsereignis in einer Umgebung, umfassend:
- Empfangen von Sensordaten von einer Vielzahl von Sensoren, die sich in der Umgebung befinden, wobei die Vielzahl von Sensoren mindestens eine Kamera umfasst und die Sensordaten mindestens eine Vielzahl von Bildern einschließen, die von der mindestens einen Kamera erfasst wurden;
- Parsen der Sensordaten, wobei das Parsen Folgendes umfasst:
- Identifizieren einer Vielzahl von Objekten in jedem der Vielzahl von Bildern; und
- Bestimmen von Attributen jedes Objekts aus der Vielzahl von Objekten;
- Speichern der geparsten Sensordaten, umfassend Identifikatoren der Vielzahl von Objekten und die Attribute, in einer Datenbank, wobei die Datenbank so strukturiert ist, dass die Objektinformationen nach Zeitstempeln und dem zugehörigen Standort in der Umgebung geordnet sind;
- Erkennen des Sicherheitsvorfalls in der Umgebung;
- Bestimmen eines Zeitfensters und eines Ortes des Sicherheitsvorfalls;
- Bestimmen eines Typs des Sicherheitsereignisses aus einer Vielzahl von Sicherheitsereignistypen, wobei jeder Typ eines Sicherheitsereignisses aus der Vielzahl von Sicherheitsereignistypen einem anderen Satz von Attributen von Objekten in der Datenbank zugeordnet wird;
- Abrufen eines Datensatzes von Objektkennungen mit Zeitstempeln innerhalb des Zeitfensters und einem übereinstimmenden Ort des Sicherheitsereignisses aus der Datenbank;
- Filtern mindestens einer Objektkennung, die dem Typ des Sicherheitsereignisses zugeordnet ist, aus dem Datensatz der Objektkennungen basierend auf Zuordnungen in der Datenbank; und
- Ausgeben der mindestens einen Objektkennung und der Attribute der mindestens einen Objektkennung auf einer Rechenvorrichtung als Reaktion auf die Erkennung des Sicherheitsereignisses.

2. Verfahren nach Anspruch 1,
wobei ein Objekt eine Person ist und die Attribute der Person das Geschlecht, das geschätzte Alter, biometrische Daten, Informationen zur Kleidung und den Bewegungsverlauf einschließen,
wobei optional ein zweites Objekt eine Zigarette ist und wobei optional ein weiteres Objekt Flammen sind
und wobei optional das Sicherheitsereignis die Auslösung eines Brandmelders oder der Alarm eines Rauchmelders ist.

3. Verfahren nach Anspruch 1,
wobei das Erkennen des Sicherheitsereignisses ferner das Bestimmen umfasst, dass die von mindestens einem Sensor der Vielzahl von Sensoren empfangenen Sensordaten eine Anomalie aufweisen,
wobei das Bestimmen, dass die von dem mindestens einen Sensor empfangenen Sensordaten die Anomalie umfassen, ferner Folgendes umfasst:
- Vergleichen der von dem mindestens einen Sensor empfangenen Sensordaten mit historischen Sensordaten, die von dem mindestens einen Sensor empfangen wurden; und
- Bestimmen, basierend auf dem Vergleich, dass eine Abweichung zwischen den historischen Sensordaten und den von dem mindestens einen Sensor empfangenen Sensordaten einen Schwellenwert überschreitet.

4. Verfahren nach Anspruch 3,
wobei der mindestens eine Sensor einen Temperatursensor umfasst und die Abweichung eine Temperaturabweichung von einer Durchschnittstemperatur ist, die die Schwellenabweichung überschreitet,
oder
wobei der mindestens eine Sensor ein Mikrofon umfasst und die Anomalie eine Abweichung des Schallpegels vom durchschnittlichen Schallpegel darstellt, die den Schwellenwert überschreitet.

5. Verfahren nach Anspruch 1,
wobei das Erkennen des Sicherheitsereignisses das Empfangen einer Angabe über das Sicherheitsereignis von einem Benutzer umfasst.

6. Gerät, um Kontextdaten für ein Sicherheitsereignis in einer Umgebung bereitzustellen, umfassend:
- eine Vielzahl von Sensoren;
- einen Speicher; und
- ein Prozessor, der kommunikativ mit dem Speicher gekoppelt und wie folgt konfiguriert ist zum:
- Empfangen von Sensordaten von der Vielzahl von Sensoren, die sich in der Umgebung befinden, wobei die Vielzahl von Sensoren mindestens eine Kamera umfasst und die Sensordaten mindestens eine Vielzahl von Bildern einschließen, die von der mindestens einen Kamera erfasst wurden;
- Parsen der Sensordaten, wobei das Parsen Folgendes umfasst:
- Identifizieren einer Vielzahl von Objekten in jedem der Vielzahl von Bildern; und
- Bestimmen von Attributen jedes Objekts aus der Vielzahl von Objekten;
- Speichern der geparsten Sensordaten, umfassend Identifikatoren der Vielzahl von Objekten und die Attribute, in einer Datenbank, wobei die Datenbank so strukturiert ist, dass die Objektinformationen nach Zeitstempeln und dem zugehörigen Standort in der Umgebung geordnet sind;
- Erkennen des Sicherheitsvorfalls in der Umgebung;
- Bestimmen eines Zeitfensters und eines Ortes des Sicherheitsvorfalls;
- Bestimmen eines Typs des Sicherheitsereignisses aus einer Vielzahl von Sicherheitsereignistypen, wobei jeder Typ eines Sicherheitsereignisses aus der Vielzahl von Sicherheitsereignistypen einem anderen Satz von Attributen von Objekten in der Datenbank zugeordnet wird;
- Abrufen eines Datensatzes von Objektkennungen mit Zeitstempeln innerhalb des Zeitfensters und einem übereinstimmenden Ort des Sicherheitsereignisses aus der Datenbank;
- Filtern mindestens einer Objektkennung, die dem Typ des Sicherheitsereignisses zugeordnet ist, aus dem Datensatz der Objektkennungen basierend auf Zuordnungen in der Datenbank; und
- Ausgeben der mindestens einen Objektkennung und der Attribute der mindestens einen Objektkennung auf einer Rechenvorrichtung als Reaktion auf die Erkennung des Sicherheitsereignisses.

7. Gerät nach Anspruch 6,
wobei es sich bei dem Objekt um eine Person handelt und die Attribute der Person das Geschlecht, das geschätzte Alter, biometrische Daten, Informationen zur Kleidung sowie den Bewegungsverlauf einschließen.
wobei es sich bei einem zweiten Objekt (104) optional um eine Zigarette handelt und bei einem dritten Objekt (106) optional um Flammen,
und wobei es sich bei dem Sicherheitsereignis optional um die Auslösung eines Brandmelders oder um den Alarm eines Rauchmelders handelt.

8. Gerät nach Anspruch 6,
wobei das Erkennen des Sicherheitsereignisses ferner das Bestimmen umfasst, dass die von mindestens einem Sensor der Vielzahl von Sensoren empfangenen Sensordaten eine Anomalie aufweisen,
wobei das Bestimmen, dass die von dem mindestens einen Sensor empfangenen Sensordaten die Anomalie umfassen, ferner Folgendes umfasst:
- Vergleichen der von dem mindestens einen Sensor empfangenen Sensordaten mit historischen Sensordaten, die von dem mindestens einen Sensor empfangen wurden; und
- Bestimmen, basierend auf dem Vergleich, dass eine Abweichung zwischen den historischen Sensordaten und den von dem mindestens einen Sensor empfangenen Sensordaten einen Schwellenwert überschreitet.

9. Gerät nach Anspruch 8,
wobei der mindestens eine Sensor einen Temperatursensor umfasst und die Abweichung eine Temperaturabweichung von einer Durchschnittstemperatur ist, die die Schwellenabweichung überschreitet, oder
wobei der mindestens eine Sensor ein Mikrofon umfasst und die Anomalie eine Abweichung des Schallpegels vom durchschnittlichen Schallpegel darstellt, die den Schwellenwert überschreitet.

10. Gerät nach Anspruch 6,
wobei das Erkennen des Sicherheitsereignisses das Empfangen einer Angabe über das Sicherheitsereignis von einem Benutzer umfasst.

11. Computerlesbares Medium, das Anweisungen aufweist, um Kontextdaten für ein Sicherheitsereignis in einer Umgebung bereitzustellen, wobei die Anweisungen von einem Prozessor ausgeführt werden können, um das Verfahren nach einem der Ansprüche 1 bis 5 durchzuführen.

## Revendications

1. Procédé implémenté par ordinateur permettant de fournir des données contextuelles pour un événement de sécurité dans un environnement, comprenant :
- la réception de données de capteur provenant d'une pluralité de capteurs situés dans l'environnement, dans lequel la pluralité de capteurs comprend au moins une caméra et les données de capteur comportent au moins une pluralité d'images capturées par l'au moins une caméra ;
- l'analyse des données de capteur, dans lequel l'analyse comprend :
- l'identification d'une pluralité d'objets dans chaque image parmi la pluralité d'images ; et
- la détermination d'attributs de chaque objet parmi la pluralité d'objets ;
- le stockage, dans une base de données, des données de capteur analysées comprenant des identifiants parmi la pluralité d'objets et les attributs, dans lequel la base de données est structurée de telle sorte que des informations d'objet sont organisées par des horodatages et un emplacement associé dans l'environnement ;
- la détection de l'événement de sécurité au niveau de l'environnement ;
- la détermination d'une fenêtre de temps et d'un emplacement de l'événement de sécurité ;
- la détermination, à partir d'une pluralité de types d'événements de sécurité, d'un type de l'événement de sécurité, dans lequel chaque type d'événement de sécurité à partir de la pluralité de types d'événements de sécurité est mappé sur un ensemble différent d'attributs d'objets dans la base de données ;
- la récupération, à partir de la base de données, d'un ensemble d'identifiants d'objets avec des horodatages à l'intérieur de la fenêtre de temps et d'un emplacement de correspondance de l'événement de sécurité ;
- le filtrage, à partir de l'ensemble d'identifiants d'objets, d'au moins un identifiant d'objet associé au type de l'événement de sécurité, sur la base des mappages dans la base de données ; et
- la sortie, sur un dispositif informatique, de l'au moins un identifiant d'objet et d'attributs de l'au moins un identifiant d'objet en réponse à la détection de l'événement de sécurité.

2. Procédé selon la revendication 1,
dans lequel un objet représente une personne et les attributs de la personne comportent un sexe, un âge estimé, des données biométriques, des informations sur les vêtements et un historique des déplacements,
dans lequel éventuellement un deuxième objet représente une cigarette et dans lequel éventuellement un autre objet représente des flammes
et dans lequel éventuellement l'événement de sécurité représente un déclenchement de capteur d'alarme incendie ou une alarme de détecteur de fumée.

3. Procédé selon la revendication 1,
dans lequel la détection de l'événement de sécurité comprend en outre la détermination que les données de capteur reçues d'au moins un capteur parmi la pluralité de capteurs comprend une anomalie,
dans lequel la détermination que les données de capteur reçues de l'au moins un capteur comprend l'anomalie comprend en outre :
- la comparaison des données de capteur reçues de l'au moins un capteur avec des données de capteur historiques reçues de l'au moins un capteur ; et
- la détermination, sur la base de la comparaison, qu'une différence entre les données de capteur historiques et les données de capteur reçues de l'au moins un capteur dépasse une différence de seuil.

4. Procédé selon la revendication 3,
dans lequel l'au moins un capteur comprend un capteur de température et l'anomalie est une différence de température par rapport à une température moyenne qui dépasse la différence de seuil
ou
dans lequel l'au moins un capteur comprend un microphone et l'anomalie est une différence de niveau sonore par rapport à un niveau sonore moyen qui dépasse la différence de seuil.

5. Procédé selon la revendication 1,
dans lequel la détection de l'événement de sécurité comprend la réception d'une indication de l'événement de sécurité provenant d'un utilisateur.

6. Appareil permettant de fournir des données contextuelles pour un événement de sécurité dans un environnement, comprenant :
- une pluralité de capteurs ;
- une mémoire ; et
- un processeur couplé de manière communicative à la mémoire et configuré pour :
- recevoir des données de capteur provenant de la pluralité de capteurs situés dans l'environnement, dans lequel la pluralité de capteurs comprend au moins une caméra et les données de capteur comportent au moins une pluralité d'images capturées par l'au moins une caméra ;
- analyser les données de capteur, dans lequel l'analyse comprend :
- l'identification d'une pluralité d'objets dans chaque image parmi la pluralité d'images ; et
- la détermination d'attributs de chaque objet parmi la pluralité d'objets ;
- stocker, dans une base de données, les données de capteur analysées comprenant des identifiants parmi la pluralité d'objets et les attributs, dans lequel la base de données est structurée de telle sorte que des informations d'objet sont organisées par des horodatages et un emplacement associé dans l'environnement ;
- détecter l'événement de sécurité au niveau de l'environnement ;
- déterminer une fenêtre de temps et un emplacement de l'événement de sécurité ;
- déterminer, à partir d'une pluralité de types d'événements de sécurité, un type de l'événement de sécurité, dans lequel chaque type d'événement de sécurité à partir de la pluralité de types d'événements de sécurité est mappé sur un ensemble différent d'attributs d'objets dans la base de données ;
- récupérer, à partir de la base de données, un ensemble d'identifiants d'objets avec des horodatages à l'intérieur de la fenêtre de temps et un emplacement de correspondance de l'événement de sécurité ;
- filtrer, à partir de l'ensemble d'identifiants d'objets, au moins un identifiant d'objet associé au type de l'événement de sécurité, sur la base des mappages dans la base de données ; et
- sortir, sur un dispositif informatique, l'au moins un identifiant d'objet et des attributs de l'au moins un identifiant d'objet en réponse à la détection de l'événement de sécurité.

7. Appareil selon la revendication 6,
dans lequel un objet est une personne et les attributs de la personne comportent un sexe, un âge estimé, des données biométriques, des informations sur les vêtements et un historique des déplacements.
dans lequel éventuellement un deuxième objet (104) représente une cigarette et dans lequel éventuellement un troisième objet (106) représente des flammes
et dans lequel éventuellement l'événement de sécurité représente un déclenchement de capteur d'alarme incendie ou une alarme de détecteur de fumée.

8. Appareil selon la revendication 6,
dans lequel la détection de l'événement de sécurité comprend en outre la détermination que les données de capteur reçues d'au moins un capteur parmi la pluralité de capteurs comprend une anomalie,
dans lequel la détermination que les données de capteur reçues de l'au moins un capteur comprend l'anomalie comprend en outre :
- la comparaison des données de capteur reçues de l'au moins un capteur avec des données de capteur historiques reçues de l'au moins un capteur ; et
- la détermination, sur la base de la comparaison, qu'une différence entre les données de capteur historiques et les données de capteur reçues de l'au moins un capteur dépasse une différence de seuil.

9. Appareil selon la revendication 8,
dans lequel l'au moins un capteur comprend un capteur de température et l'anomalie est une différence de température par rapport à une température moyenne qui dépasse la différence de seuil ou
dans lequel l'au moins un capteur comprend un microphone et l'anomalie est une différence de niveau sonore par rapport à un niveau sonore moyen qui dépasse la différence de seuil.

10. Appareil selon la revendication 6,
dans lequel la détection de l'événement de sécurité comprend la réception d'une indication de l'événement de sécurité provenant d'un utilisateur.

11. Support lisible par ordinateur ayant des instructions stockées permettant de fournir des données contextuelles pour un événement de sécurité dans un environnement, dans lequel les instructions sont exécutables par un processeur pour mettre en œuvre le procédé selon l'une quelconque des revendications 1 à 5.
